# EUROPÄISCHE PATENTSCHRIFT

(11) **EP 3 877 224 B1**
(45) Veröffentlichungstag und Bekanntmachung des Hinweises auf die Patenterteilung: **07.12.2022**
(21) Anmeldenummer: 19800935.9
(22) Anmeldetag: 23.10.2019
(51) Int. Cl.: B60T 7/04, B60T 13/66, B60T 17/22, B60W 30/08

(54) **VERFAHREN ZUM VERÄNDERN EINER KENNLINIE EINES GASPEDALS EINES KRAFTFAHRZEUGS UND KENNLINIENVERÄNDERUNGSVORRICHTUNG FÜR EIN KRAFTFAHRZEUG**
METHOD FOR CHANGING A CHARACTERISTIC CURVE OF AN ACCELERATOR PEDAL OF A MOTOR VEHICLE AND CHARACTERISTIC-CURVE-CHANGING DEVICE FOR A MOTOR VEHICLE
PROCÉDÉ POUR MODIFIER UNE COURBE CARACTÉRISTIQUE D'UNE PÉDALE D'ACCÉLÉRATEUR D'UN VÉHICULE AUTOMOBILE ET DISPOSITIF DE MODIFICATION DE COURBE CARACTÉRISTIQUE POUR UN VÉHICULE AUTOMOBILE

(30) Priorität: 08.11.2018 DE 102018219008
(43) Veröffentlichungstag der Anmeldung: 15.09.2021
(73) Patentinhaber: Robert Bosch GmbH, 70442 Stuttgart (DE)
(72) Erfinder: MARQUART, Martin, 78564 Reichenbach (DE); GERDES, Manfred, 71665 Vaihingen/Enz (DE); HAAG, Florian, 74248 Ellhofen (DE)
(86) Internationale Anmeldenummer: PCT/EP2019/078852
(87) Internationale Veröffentlichungsnummer: WO 2020/094398

(56) Entgegenhaltungen:
- CN-B- 104 828 054
- CN-U- 203 496 882
- JP-A- 2011 240 850
- US-A1- 2017 254 284

## Beschreibung

### Gebiet der Erfindung

Die Erfindung betrifft ein Verfahren zum Verändern einer Kennlinie eines Gaspedals eines Kraftfahrzeugs und eine Kennlinienveränderungsvorrichtung für ein Kraftfahrzeug.

### Stand der Technik

Ein elektromechanischer Bremskraftverstärker und ein elektronisches Stabilitätsprogramm-System (ESP-System) bilden einen Teil eines Bremssystems in einem Kraftfahrzeug. Zwischen dem elektromechanischen Bremskraftverstärker und dem ESP-System gibt es eine über den CAN-Bus vorhandene normierte Schnittstelle. In dieser Schnittstelle ist unter anderem das folgende Signal enthalten, das vom elektromechanischen Bremskraftverstärker an das ESP-System übermittelt wird: HBCrequest; Dieses Signal zeigt an, ob der elektromechanische Bremskraftverstärker seiner Funktion nachkommen kann oder ob der Druckaufbau für das Bremsen des Kraftfahrzeugs durch das ESP-System übernommen werden muss.

Nachteilig an bisher bekannten Verfahren bzw. Systemen ist, dass der Fahrer des Kraftfahrzeugs während der Fahrt unter Umständen nicht erfasst, dass der Bremskraftverstärker seine Funktion nicht mehr erfüllt und dass das Aufbauen eines Bremsdrucks durch das elektronische Stabilitätsprogramm-System (ESP) durchgeführt wird.

JP 2011 240850 A beschreibt ein Bremssteuersystem mit einem Bremskraftverstärker und einer Druckspeichervorrichtung. CN 203 496 882 U beschreibt einen Bremskraftverstärker mit einer angepassten Unterdruckunterstützung.

### Offenbarung der Erfindung

Vor diesem Hintergrund werden mit dem hier vorgestellten Ansatz ein Verfahren zum Verändern einer Kennlinie eines Gaspedals eines Kraftfahrzeugs und eine Kennlinienveränderungsvorrichtung für ein Kraftfahrzeug
gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, technisch einfach den Fahrer darüber zu informieren, dass der Bremskraftverstärker seine Funktion nicht mehr vollständig erfüllt.

Gemäß einem ersten Aspekt der Erfindung wird ein Verfahren zum Verändern einer Kennlinie eines Gaspedals eines Kraftfahrzeugs vorgeschlagen, wobei das Verfahren folgende Schritte umfasst: Feststellen, dass ein Bremskraftverstärker des Kraftfahrzeugs eine Fehlfunktion aufweist, insbesondere dass ein Bremskraftverstärker des Kraftfahrzeugs nicht funktioniert; und wenn eine Fehlfunktion des Bremskraftverstärkers festgestellt wird, Verändern der Kennlinie des Gaspedals derart, dass bei einem Nicht-Betätigen des Gaspedals und einem Nicht-Betätigen eines Bremspedals des Kraftfahrzeugs das Kraftfahrzeug verzögert wird.

Vorteilhaft hieran ist, dass der Fahrer technisch einfach haptisch darüber informiert wird, dass der Bremskraftverstärker seine Funktion nicht mehr vollständig erfüllt bzw. eine Fehlfunktion aufweist. Durch die verschobene Kennlinie des Gaspedals merkt der Fahrer, dass das Fahrzeug bremst bzw. verzögert wird (z.B. mit einer Verzögerung von ca. 0,25 g), auch wenn das Bremspedal nicht betätigt wird. Zudem wird hierdurch die Sicherheit erhöht. Durch das Verzögern des Fahrzeugs bei einer neutralen Stellung des Gaspedals wird der Fahrer darüber informiert, dass ein Problem in dem Kraftfahrzeug aufgetreten ist. Genauere Informationen kann er dann einer Anzeige und/oder einem Display, z.B. im Armaturenbrett, und/oder einer Ansage entnehmen. Die Fehlfunktion des Bremskraftverstärkers kann beispielsweise dadurch erkannt werden, dass das Signal HBCrequest gesetzt wird. Möglich ist jedoch auch, dass im Fall eines kommunikationsunfähigen Bremskraftverstärkers ein elektronisches Stabilitätsprogramm-System (ESP-System) feststellt, dass keine Kommunikation mit dem Bremskraftverstärker möglich ist und daraufhin feststellt, dass der Bremskraftverstärker nicht (vollständig) funktioniert bzw. eine Fehlfunktion aufweist. Zudem ist möglich, dass eine Fehlfunktion des Bremskraftverstärkers anhand des nicht vorhandenen Signals HBCrequest in anderen Steuergeräten erkannt wird. Die Fehlfunktion des Bremskraftverstärkers kann insbesondere sein, dass der Bremskraftverstärker keinen oder nicht den notwendigen Druck in der Bremsflüssigkeit zum Bremsen des Kraftfahrzeugs aufbauen kann. Darüber hinaus benötigt der Fahrer weniger Kraft, um eine Bremswirkung zu erzielen, da bereits bei einer neutralen Stellung des Gaspedals ein Druck in der Bremsflüssigkeit aufgebaut ist bzw. wird.

Gemäß einem zweiten Aspekt der Erfindung wird eine Kennlinienveränderungsvorrichtung für ein Kraftfahrzeug vorgeschlagen, wobei die Kennlinienveränderungsvorrichtung zum Verändern einer Kennlinie eines Gaspedals des Kraftfahrzeugs ausgebildet ist, wobei die Kennlinienveränderungsvorrichtung folgendes aufweist: eine Feststellungvorrichtung zum Feststellen, dass ein Bremskraftverstärker des Kraftfahrzeugs eine Fehlfunktion aufweist, insbesondere dass ein Bremskraftverstärker des Kraftfahrzeugs nicht funktioniert; und gekennzeichnet durch eine Veränderungseinrichtung zum Verändern einer Kennlinie des Gaspedals derart, dass bei einem Nicht-Betätigen des Gaspedals und einem Nicht-Betätigen einer Bremse des Kraftfahrzeugs das Kraftfahrzeug verzögert wird, wenn die Feststellungvorrichtung eine Fehlfunktion des Bremskraftverstärkers festgestellt hat.

Ein Vorteil hiervon ist, dass der Fahrer technisch einfach haptisch darüber informiert werden kann, dass der Bremskraftverstärker seine Funktion nicht mehr vollständig erfüllt bzw. eine Fehlfunktion aufweist. Durch die von der Kennlinienveränderungsvorrichtung verschobene Kennlinie des Gaspedals merkt der Fahrer, dass das Fahrzeug bremst bzw. verzögert wird (z.B. mit einer Verzögerung von ca. 0,25 g), auch wenn das Bremspedal nicht betätigt wird. Zudem wird hierdurch die Sicherheit erhöht. Durch das Verzögern des Fahrzeugs bei einer neutralen Stellung des Gaspedals wird der Fahrer darüber informiert, dass ein Problem in dem Kraftfahrzeug aufgetreten ist. Genauere Informationen kann er dann einer Anzeige und/oder einem Display, z.B. im Armaturenbrett, und/oder einer Ansage entnehmen. Die Fehlfunktion des Bremskraftverstärkers kann von der Feststellungvorrichtung beispielsweise dadurch erkannt werden, dass das Signal HBCrequest gesetzt wird. Möglich ist jedoch auch, dass im Fall eines kommunikationsunfähigen Bremskraftverstärkers ein elektronisches Stabilitätsprogramm-System (ESP-System) feststellt, dass keine Kommunikation mit dem Bremskraftverstärker möglich ist und daraufhin feststellt, dass der Bremskraftverstärker nicht (vollständig) funktioniert bzw. eine Fehlfunktion aufweist. Zudem ist möglich, dass eine Fehlfunktion des Bremskraftverstärkers anhand des nicht vorhandenen Signals HBCrequest in anderen Steuergeräten erkannt wird. Die Fehlfunktion des Bremskraftverstärkers kann insbesondere sein, dass der Bremskraftverstärker keinen oder nicht den notwendigen Druck in der Bremsflüssigkeit zum Bremsen des Kraftfahrzeugs aufbauen kann. Darüber hinaus benötigt der Fahrer weniger Kraft, um eine Bremswirkung zu erzielen, da bereits bei einer neutralen Stellung des Gaspedals ein Druck in der Bremsflüssigkeit aufgebaut ist bzw. wird.

Ideen zu Ausführungsformen der vorliegenden Erfindung können unter anderem als auf den nachfolgend beschriebenen Gedanken und Erkenntnissen beruhend angesehen werden.

Die Erfindung basiert unter anderem auf der Idee, bei einer Fehlfunktion des elektromechanischen Bremskraftverstärkers eines Kraftfahrzeugs die Kennlinie des Gaspedals derart zu verändern, dass bei einer Inaktivität des Fahrers (d.h. der Fahrer bremst nicht und gibt kein Gas) dem Fahrer durch das aktive Bremsen des Kraftfahrzeugs darüber informiert wird, dass ein Problem in dem Kraftfahrzeug aufgetreten ist.

Gemäß einer Ausführungsform wird, wenn eine Fehlfunktion des Bremskraftverstärkers festgestellt wird, die Kennlinie des Gaspedals derart verändert, dass bei einem Nicht-Betätigen der Bremse des Kraftfahrzeugs und einer Betätigung des Gaspedals aus einer neutralen Stellung in einem ersten Bereich das Kraftfahrzeug verzögert wird. Vorteilhaft hieran ist, dass das Kraftfahrzeug auch dann nicht beschleunigt wird, wenn das Gaspedal leicht gedrückt wird. Dies ist eine weitere Art und Weise, dem Fahrer mitzuteilen, dass ein Problem in dem Kraftfahrzeug aufgetreten ist bzw. dass der elektromechanische Bremskraftverstärker eine Fehlfunktion aufweist. Somit wird, auch wenn die Fehlunktion des Bremskraftverstärkers während des leichten Drückens des Gaspedals auftritt, dem Fahrer hierdurch haptisch mitgeteilt, dass der elektromechanische Bremskraftverstärker eine Fehlfunktion aufweist.

Gemäß einer Ausführungsform wird die Verzögerung des Kraftfahrzeugs in dem ersten Bereich geringer, je weiter das Gaspedal aus der neutralen Stellung bewegt wird. Ein Vorteil hiervon ist, dass bei einem Betätigen des Gaspedals aus der Neutralstellung bzw. neutralen Stellung, d.h. der nicht-betätigten Stellung, heraus die Verzögerung des Kraftfahrzeugs geringer wird. Somit wird das Verzögern des Kraftfahrzeugs bei einem weiteren Betätigen des Gaspedals nicht plötzlich beendet, sondern das Verzögern des Kraftfahrzeugs sinkt allmählich auf den Wert Null ab, je weiter das Gaspedal betätigt wird. Dies erhöht die Sicherheit der Bedienung des Kraftfahrzeugs, u.a. da ein abruptes Beenden der Verzögerung des Kraftfahrzeugs verhindert wird.

Gemäß einer Ausführungsform wird, wenn eine Fehlfunktion des Bremskraftverstärkers festgestellt wird, die Kennlinie des Gaspedals derart verändert, dass in einer einzigen vorgegebenen Stellung des Gaspedals, die ungleich der neutralen Stellung ist, das Kraftfahrzeug weder beschleunigt noch verzögert wird. Vorteilhaft hieran ist, dass der Übergang vom Verzögern zum Beschleunigen punktförmig ist bzw. nur eine Stellung bzw. Position des Gaspedals existiert, an der das Fahrzeug nicht verzögert und nicht beschleunigt wird. Somit kann das Fahrzeug durch geringe Veränderung der Stellung des Gaspedals verzögert bzw. beschleunigt werden. Dies erhöht die Verkehrssicherheit.

Gemäß einer Ausführungsform wird, wenn eine Fehlfunktion des Bremskraftverstärkers festgestellt wird, die Kennlinie des Gaspedals derart verändert, dass in einem zweiten Bereich der Position des Gaspedals das Kraftfahrzeug weder beschleunigt noch verzögert wird. Somit gibt es einen Bereich der Gaspedalstellung, in der das Kraftfahrzeug weder beschleunigt noch gebremst wird. Somit existiert in der Kennlinie des Gaspedals nicht nur ein Punkt, sondern ein Bereich des "Segelns" (d.h. das Fahrzeug wird trotz Gaspedalbetätigung weder beschleunigt noch verzögert). Hierdurch muss der Fahrer nicht präzise eine vorgegebene Gaspedalstellung halten, um das Kraftfahrzeug weder beschleunigen noch verzögern zu lassen, sondern der Fahrer kann die Gaspedalstellung in dem vorgegebenen Bereich variieren. Dies erleichtert dem Fahrer, das Gaspedal derart zu betätigen, dass das Kraftfahrzeug weder beschleunigt noch bremst. Somit wird die Verkehrssicherheit erhöht.

Gemäß einer Ausführungsform wird das Verzögern des Kraftfahrzeugs mittels eines Druckaufbaus eines elektronischen Stabilitätsprogramm-Systems (ESP-System) durchgeführt. Hierdurch kann technisch einfach bei einer Fehlfunktion des Bremskraftverstärkers der zum Bremsen bzw. Verzögern notwendige Druck in der Bremsflüssigkeit aufgebaut werden.

Gemäß einer Ausführungsform wird, wenn eine Fehlfunktion des Bremskraftverstärkers festgestellt wird, die Kennlinie derart verändert, dass ein gleitender Übergang von einer Normalkennlinie des Gaspedals zu der veränderten Kennlinie durchgeführt wird. Vorteilhaft hieran ist, dass beim Auftreten eines Fehlers des Bremskraftverstärkers kein abrupter Übergang von der normalen Kennlinie des Gaspedals (Normalkennlinie), die vorliegt, wenn der Bremskraftverstärker keine Fehlfunktion aufweist, zu der veränderten Kennlinie des Gaspedals stattfindet, sondern ein fließender bzw. gleitender Übergang. Hierdurch wird sicher verhindert, dass z.B. während eines Überholvorgangs ein plötzliches Verzögern bzw. ein Nicht-mehr-Beschleunigen des Kraftfahrzeugs aufgrund der veränderten Kennlinie des Gaspedals auftritt. Dies erhöht die Verkehrssicherheit.

Gemäß einer Ausführungsform wird, wenn eine Fehlfunktion des Bremskraftverstärkers festgestellt wird, bei Erkennung einer Bewegungsgeschwindigkeit des Gaspedals, die oberhalb eines vorgegebenen Mindestwerts liegt, in die neutrale Stellung ein vorgegebener Bremsdruck aufgebaut. Ein Vorteil hiervon ist, dass bei einem schnellen Lösen des Gaspedals bzw. Loslassen des Gaspedals ein Bremsdruck zum Bremsen des Kraftfahrzeugs aufgebaut wird. Insbesondere kann bei einem ruckartigen oder schnellen Lösen des Gaspedals ein adaptierter Druckaufbau über das ESP-System bereitgestellt werden.

Gemäß einer Ausführungsform wird, wenn die Fehlfunktion des Bremskraftverstärkers festgestellt wird, dem Fahrer die Fehlfunktion des Bremskraftverstärkers haptisch, z.B. durch Vibration des Gaspedals, mitgeteilt. Vorteilhaft hieran ist, dass der Fahrer neben der Verzögerung des Kraftfahrzeugs auch bei Nicht-Betätigen des Bremspedals zusätzlich darüber informiert wird, dass das Kraftfahrzeug ein Problem aufweist.

Es wird darauf hingewiesen, dass einige der möglichen Merkmale und Vorteile der Erfindung hierin mit Bezug auf unterschiedliche Ausführungsformen des Verfahrens zum Verändern einer Kennlinie eines Gaspedals eines Kraftfahrzeugs bzw. der Kennlinienveränderungsvorrichtung für ein Kraftfahrzeug beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Die Kennlinie des Gaspedals kann insbesondere angeben, abhängig von welcher Position bzw. Stellung des Gaspedals wie stark ein Verzögern bzw. eine Beschleunigung des Kraftfahrzeugs stattfindet bzw. durchgeführt wird. Die Kennlinie kann beispielsweise in einem Motorsteuergerät des Kraftfahrzeugs vorhanden sein.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: ein Diagramm der Gaspedalposition aufgetragen gegen den ESP-Druck mit einer veränderten Kennlinie des Gaspedals; und
- Fig. 2 zeigt: ein Diagramm der Gaspedalposition aufgetragen gegen die Beschleunigung des Kraftfahrzeugs mit einer Normalkennlinie und mit einer veränderten Kennlinie des Gaspedals.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

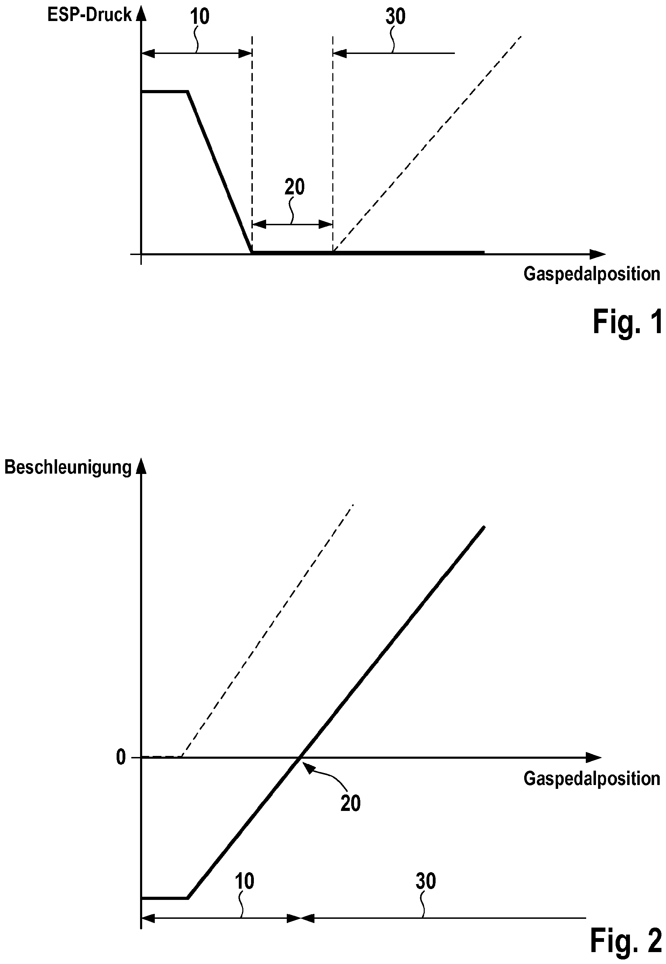

Fig. 1 zeigt ein Diagramm der Gaspedalposition aufgetragen gegen den von elektronischen Stabilitätsprogramm-System aufgebauten Druck der Bremsflüssigkeit mit einer veränderten Kennlinie des Gaspedals. Fig. 2 zeigt ein Diagramm der Gaspedalposition aufgetragen gegen die Beschleunigung des Kraftfahrzeugs mit einer Normalkennlinie und mit einer veränderten Kennlinie des Gaspedals.

In Fig. 1 ist auf der x-Achse eine Position des Gaspedals aufgetragen, wobei der Wert x=0 der Neutralstellung bzw. neutralen Stellung des Gaspedals, in der das Gaspedal nicht betätigt ist, entspricht. Auf der y-Achse der Fig. 1 ist der Druck, der von einem elektronischen Stabilitätsprogramm-System aufgebaut wird, aufgetragen. Die gestrichelte Linie in Fig. 1 zeigt das Antriebsmoment des Kraftfahrzeugs.

In Fig. 2 ist auf der x-Achse eine Position des Gaspedals aufgetragen, wobei der Wert x=0 der Neutralstellung bzw. neutralen Stellung des Gaspedals, in der das Gaspedal nicht betätigt ist, entspricht. Auf der y-Achse ist die die Beschleunigung des Kraftfahrzeugs (positive y-Achse) bzw. die Verzögerung des Kraftfahrzeugs (negative y-Achse) aufgetragen.

Das Kraftfahrzeug umfasst üblicherweise einen elektromechanischen Bremskraftverstärker und ein elektronisches Stabilitätsprogramm-System (ESP-System). Der elektromechanische Bremskraftverstärker und das ESP-System können jeweils Druck in der Bremsflüssigkeit des Kraftfahrzeugs zum Bremsen des Kraftfahrzeugs aufbauen. Bei einer Fehlfunktion des elektromechanischen Bremskraftverstärkers, d.h. der elektromechanische Bremskraftverstärker kann keinen Druck oder nicht ausreichend hohen Druck in der Bremsflüssigkeit aufbauen, kann das ESP-System als Rückfallebene den Druckaufbau in der Bremsflüssigkeit übernehmen, d.h. das ESP-System baut anstelle des Bremskraftverstärkers den Druck in der Bremsflüssigkeit auf.

Das Kraftfahrzeug umfasst zudem eine Kennlinienveränderungsvorrichtung zum Verändern einer Kennlinie eines Gaspedals des Kraftfahrzeugs. Die Kennlinienveränderungsvorrichtung weist eine Feststellungvorrichtung zum Feststellen, dass ein elektromechanischer Bremskraftverstärker des Kraftfahrzeugs eine Fehlfunktion aufweist, insbesondere dass ein elektromechanischer Bremskraftverstärker des Kraftfahrzeugs nicht funktioniert, und eine Veränderungseinrichtung zum Verändern der Kennlinie des Gaspedals derart, dass bei einem Nicht-Betätigen des Gaspedals und einem Nicht-Betätigen einer Bremse des Kraftfahrzeugs das Kraftfahrzeug verzögert wird, wenn eine Fehlfunktion des elektromechanischen Bremskraftverstärkers festgestellt wird bzw. wurde.

Die Normalkennlinie (auch nominale Kennlinie genannt) des Gaspedals ist gegeben bzw. wird verwendet, wenn keine Fehlfunktion des elektromechanischen Bremskraftverstärkers vorliegt bzw. ein solcher nicht erkannt wurde. Wie in Fig. 2 gezeigt wird bei der Normalkennlinie (gestrichelt dargestellt) das Kraftfahrzeug weder beschleunigt noch gebremst, wenn das Gaspedal nicht betätigt wird (x=0) (und auch das Bremspedal nicht betätigt wird). Bei einer sehr leichten Betätigung des Gaspedals findet noch keine Beschleunigung statt. Bei größerer Betätigung des Gaspedals startet die Beschleunigung des Kraftfahrzeugs abhängig davon, wie weit das Gaspedal betätigt ist.

Wenn festgestellt wird, dass der elektromechanische Bremskraftverstärker eine Fehlfunktion aufweist, wird von der Kennlinienveränderungsvorrichtung die Kennlinie des Gaspedals verändert. Insbesondere wird die Kennlinie in Fig. 2 nach rechts bzw. nach unten verschoben. Die Fehlfunktion des Bremskraftverstärkers kann beispielsweise dadurch erkannt werden, dass das Signal HBCrequest gesetzt wird. Bei einer Fehlfunktion des Bremskraftverstärkers kann der Bremskraftverstärker keinen oder nicht genügend Druck in der Bremsflüssigkeit zum Bremsen des Kraftfahrzeugs aufbauen. Der Druckaufbau in der Bremsflüssigkeit wird bei einer Fehlfunktion des Bremskraftverstärkers durch das ESP-System erzeugt.

Die verschobene Kennlinie, die angewandt wird, wenn eine Fehlfunktion des Bremskraftverstärkers festgestellt wurde, ist in Fig. 2 als durchgezogene Linie dargestellt. Bei der verschobenen Kennlinie wird das Fahrzeug mittels des ESP-Systems verzögert, wenn das Gaspedal in Normalstellung bzw. Grundstellung (x=0) bzw. neutraler Stellung ist. Bei einer leichten Betätigung des Gaspedals bleibt die Verzögerung auf dem Niveau, auf dem es sich bei Nicht-Betätigung des Gaspedals befindet. Bei einer weiteren Betätigung des Gaspedals wird die Verzögerung verringert, bis am Ende diesen ersten Bereichs 10 der Verzögerung die Verzögerung den Wert Null erreicht und die Beschleunigung ebenfalls den Wert Null beträgt. Entsprechend sinkt der vom ESP-System aufgebaute Druck in der Bremsflüssigkeit linear bis zum Wert Null am Ende des ersten Bereichs (siehe Fig. 1).

In Fig. 1 folgt bei weiterer Betätigung des Gaspedals nun ein zweiter Bereich 20, während in Fig. 2 nur ein Punkt 20 folgt. In diesem Bereich 20 bzw. an dem Punkt 20 wird das Fahrzeug nicht beschleunigt und auch nicht verzögert (sogenanntes Segeln). Hier weist der Druck in der Bremsflüssigkeit den Wert Null auf (vgl. Fig. 1).

Bei weiterer Betätigung des Gaspedals (d.h. in einem dritten Bereich 30 der Gaspedalposition, einem sogenannten Bereich der Beschleunigung 30) wird das Kraftfahrzeug sowohl in Fig. 1 (der Druck der Bremsflüssigkeit ist Null) als auch in Fig. 2 beschleunigt. In Fig. 1 ist gestrichelt das Antriebsmoment dargestellt. Je stärker daraufhin das Gaspedal betätigt wird, desto stärker wird das Kraftfahrzeug beschleunigt.

Wird nach Loslassen des Gaspedals das Bremspedal betätigt, steigt der Druck in der Bremsflüssigkeit durch das ESP-System über den bei x=0 in Fig. 1 (neutrale Stellung des Gaspedals) gezeigten Druck hinaus an.

Von der Normalkennlinie kann auf die verschobene bzw. veränderte Kennlinie des Gaspedals abrupt gewechselt werden oder es kann ein gleitender Übergang stattfinden. Beispielsweise kann innerhalb eines vorgegebenen Zeitraums (z.B. 10 Sekunden oder 30 Sekunden) seit dem Feststellen, dass der Bremskraftverstärker eine Fehlfunktion aufweist, von der Normalkennlinie auf die veränderte Kennlinie des Gaspedals gewechselt werden.

Wenn der Bremskraftverstärker eine Fehlfunktion aufweist, wird dem Fahrer dies durch einen optischen Hinweis (Fehlerlampe oder Anzeige auf einem Display) und/oder akustischen Hinweis (Ansage des Fehlers) mitgeteilt. Zudem kann zusätzlich zu der Veränderung bzw. Verschiebung der Kennlinie dem Fahrer eine weitere haptische Rückmeldung gegeben werden, wenn der Bremskraftverstärker eine Fehlfunktion aufweist. Dies kann z.B. durch eine Vibration des Gaspedals durchgeführt werden.

Wenn das Gaspedal gelöst ist bzw. nicht betätigt ist, kann ein dynamischer bzw. applizierbarer Druckaufbau realisiert werden. Hierdurch wird die Verkehrssicherheit noch weiter erhöht.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

Wenn das Gaspedal gelöst ist bzw. nicht betätigt ist, kann ein dynamischer bzw. applizierbarer Druckaufbau realisiert werden. Hierdurch wird die Verkehrssicherheit noch weiter erhöht.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Verändern einer Kennlinie eines Gaspedals eines Kraftfahrzeugs, wobei das Verfahren folgende Schritte umfasst:
Feststellen, dass ein Bremskraftverstärker des Kraftfahrzeugs eine Fehlfunktion aufweist, insbesondere dass ein Bremskraftverstärker des Kraftfahrzeugs nicht funktioniert; und
wenn eine Fehlfunktion des Bremskraftverstärkers festgestellt wird, Verändern der Kennlinie des Gaspedals derart, dass bei einem Nicht-Betätigen des Gaspedals und einem Nicht-Betätigen eines Bremspedals des Kraftfahrzeugs das Kraftfahrzeug verzögert wird.

2. Verfahren nach Anspruch 1, wobei,
wenn eine Fehlfunktion des Bremskraftverstärkers festgestellt wird, die Kennlinie des Gaspedals derart verändert wird, dass bei einem Nicht-Betätigen der Bremse des Kraftfahrzeugs und einer Betätigung des Gaspedals aus einer neutralen Stellung in einem ersten Bereich (10) das Kraftfahrzeug verzögert wird.

3. Verfahren nach Anspruch 2, wobei
die Verzögerung des Kraftfahrzeugs in dem ersten Bereich (10) geringer wird, je weiter das Gaspedal aus der neutralen Stellung bewegt wird.

4. Verfahren nach einem der vorhergehenden Ansprüche, wobei,
wenn eine Fehlfunktion des Bremskraftverstärkers festgestellt wird, die Kennlinie des Gaspedals derart verändert wird, dass in einer einzigen vorgegebenen Stellung des Gaspedals, die ungleich der neutralen Stellung ist, das Kraftfahrzeug weder beschleunigt noch verzögert wird.

5. Verfahren nach einem der Ansprüche 1-3, wobei
wenn eine Fehlfunktion des Bremskraftverstärkers festgestellt wird, die Kennlinie des Gaspedals derart verändert wird, dass in einem zweiten Bereich (20) der Position des Gaspedals das Kraftfahrzeug weder beschleunigt noch verzögert wird.

6. Verfahren nach einem der vorhergehenden Ansprüche, wobei
das Verzögern des Kraftfahrzeugs mittels eines Druckaufbaus eines elektronischen Stabilitätsprogramm-Systems (ESP-System) durchgeführt wird.

7. Verfahren nach einem der vorhergehenden Ansprüche, wobei,
wenn eine Fehlfunktion des Bremskraftverstärkers festgestellt wird, die Kennlinie derart verändert wird, dass ein gleitender Übergang von einer Normalkennlinie des Gaspedals zu der veränderten Kennlinie durchgeführt wird.

8. Verfahren nach einem der vorhergehenden Ansprüche, wobei
wenn eine Fehlfunktion des Bremskraftverstärkers festgestellt wird, bei Erkennung einer Bewegungsgeschwindigkeit des Gaspedals, die oberhalb eines vorgegebenen Mindestwerts liegt, in die neutrale Stellung ein vorgegebener Bremsdruck aufgebaut wird.

9. Verfahren nach einem der vorhergehenden Ansprüche, wobei
wenn die Fehlfunktion des Bremskraftverstärkers festgestellt wird, dem Fahrer die Fehlfunktion des Bremskraftverstärkers haptisch, z.B. durch Vibration des Gaspedals, mitgeteilt wird.

10. Kennlinienveränderungsvorrichtung für ein Kraftfahrzeug, wobei
die Kennlinienveränderungsvorrichtung zum Verändern einer Kennlinie eines Gaspedals des Kraftfahrzeugs ausgebildet ist, wobei die Kennlinienveränderungsvorrichtung folgendes aufweist:
eine Feststellungvorrichtung zum Feststellen, dass ein Bremskraftverstärker des Kraftfahrzeugs eine Fehlfunktion aufweist, insbesondere dass ein Bremskraftverstärker des Kraftfahrzeugs nicht funktioniert; und
**gekennzeichnet durch**
eine Veränderungseinrichtung zum Verändern einer Kennlinie des Gaspedals derart, dass bei einem Nicht-Betätigen des Gaspedals und einem Nicht-Betätigen einer Bremse des Kraftfahrzeugs das Kraftfahrzeug verzögert wird, wenn die Feststellungvorrichtung eine Fehlfunktion des Bremskraftverstärkers festgestellt hat.

## Claims

1. Method for changing a characteristic curve of an accelerator pedal of a motor vehicle, wherein the method comprises the following steps:
detecting that a brake booster of the motor vehicle has a malfunction, in particular that a brake booster of the motor vehicle is not operating; and
if a malfunction of the brake booster is detected, changing the characteristic curve of the accelerator pedal in such a manner that, when the accelerator pedal is not actuated and a brake pedal of the motor vehicle is not actuated, the motor vehicle is decelerated.

2. Method according to Claim 1, wherein,
if a malfunction of the brake booster is detected, the characteristic curve of the accelerator pedal is changed in such a manner that, when the brake of the motor vehicle is not actuated and the accelerator pedal is actuated from a neutral position in a first region (10), the motor vehicle is decelerated.

3. Method according to Claim 2, wherein
the deceleration of the motor vehicle in the first region (10) becomes lower the further the accelerator pedal is moved from the neutral position.

4. Method according to one of the preceding Claims, wherein,
if a malfunction of the brake booster is detected, the characteristic curve of the accelerator pedal is changed in such a manner that, in a single predetermined position of the accelerator pedal that is different from the neutral position, the motor vehicle is neither accelerated nor decelerated.

5. Method according to one of Claims 1-3, wherein
if a malfunction of the brake booster is detected, the characteristic curve of the accelerator pedal is changed in such a manner that, in a second region (20) of the position of the accelerator pedal, the motor vehicle is neither accelerated nor decelerated.

6. Method according to one of the preceding claims, wherein
the deceleration of the motor vehicle is carried out by means of a pressure build-up of an electronic stability program system (ESP System).

7. Method according to one of the preceding claims, wherein,
if a malfunction of the brake booster is detected, the characteristic curve is changed in such a manner that a sliding transition from a normal characteristic curve of the accelerator pedal to the changed characteristic curve is carried out.

8. Method according to one of the preceding claims, wherein,
if a malfunction of the brake booster is detected, upon identification of a movement speed of the accelerator pedal, a movement speed lying above a predetermined minimum value, into the neutral position, a predetermined braking pressure is built up.

9. Method according to one of the preceding claims, wherein,
if the malfunction of the brake booster is detected, the malfunction of the brake booster is imparted to the driver haptically, e.g., by vibration of the accelerator pedal.

10. Characteristic-curve-changing device for a motor vehicle, wherein
the characteristic-curve-changing device is configured for changing a characteristic curve of an accelerator pedal of the motor vehicle, wherein
the characteristic-curve-changing device has the following:
a detection device for detecting that a brake booster of the motor vehicle has a malfunction, in particular that a brake booster of the motor vehicle is not operating; and **characterized by** a changing means for changing a characteristic curve of the accelerator pedal in such a manner that, when the accelerator pedal is not actuated and a brake of the motor vehicle is not actuated, the motor vehicle is decelerated if the detection device has detected a malfunction of the brake booster.

## Revendications

1. Procédé pour modifier une courbe caractéristique d'une pédale d'accélérateur d'un véhicule automobile, le procédé comprenant les étapes suivantes :
la détection qu'un amplificateur de frein du véhicule automobile présente un dysfonctionnement, notamment qu'un amplificateur de frein du véhicule automobile ne fonctionne pas ; et
si un dysfonctionnement de l'amplificateur de frein est détecté, la modification de la courbe caractéristique de la pédale d'accélérateur de telle sorte que, lorsque la pédale d'accélérateur n'est pas actionnée et qu'une pédale de frein du véhicule automobile n'est pas actionnée, le véhicule automobile est décéléré.

2. Procédé selon la revendication 1, dans lequel, si un dysfonctionnement de l'amplificateur de frein est détecté, la courbe caractéristique de la pédale d'accélérateur est modifiée de telle sorte que, lorsque le frein du véhicule automobile n'est pas actionné et que la pédale d'accélérateur est actionnée à partir d'une position neutre dans une première zone (10), le véhicule automobile est décéléré.

3. Procédé selon la revendication 2, dans lequel la décélération du véhicule automobile dans la première zone (10) diminue au fur et à mesure que la pédale d'accélérateur est déplacée à partir de la position neutre.

4. Procédé selon l'une quelconque des revendications précédentes, dans lequel, si un dysfonctionnement de l'amplificateur de frein est détecté, la courbe caractéristique de la pédale d'accélérateur est modifiée de telle sorte que, dans une seule position prédéterminée de la pédale d'accélérateur, qui est différente de la position neutre, le véhicule automobile n'est ni accéléré, ni décéléré.

5. Procédé selon l'une quelconque des revendications 1 à 3, dans lequel, si un dysfonctionnement de l'amplificateur de frein est détecté, la courbe caractéristique de la pédale d'accélérateur est modifiée de telle sorte que, dans une deuxième zone (20) de la position de la pédale d'accélérateur, le véhicule automobile n'est ni accéléré, ni décéléré.

6. Procédé selon l'une quelconque des revendications précédentes, dans lequel la décélération du véhicule automobile est effectuée au moyen d'une montée en pression d'un système électronique de stabilisation (ESP) .

7. Procédé selon l'une quelconque des revendications précédentes, dans lequel, si un dysfonctionnement de l'amplificateur de frein est détecté, la courbe caractéristique est modifiée de telle sorte qu'une transition glissante est effectuée d'une courbe caractéristique normale de la pédale d'accélérateur à la courbe caractéristique modifiée.

8. Procédé selon l'une quelconque des revendications précédentes, dans lequel, si un dysfonctionnement de l'amplificateur de frein est détecté, une pression de freinage prédéterminée est établie en cas d'identification d'une vitesse de déplacement de la pédale d'accélérateur supérieure à une valeur minimale prédéterminée vers la position neutre.

9. Procédé selon l'une quelconque des revendications précédentes, dans lequel, si le dysfonctionnement de l'amplificateur de frein est détecté, le conducteur est informé du dysfonctionnement de l'amplificateur de frein de manière haptique, p. ex. par une vibration de la pédale d'accélérateur.

10. Dispositif de modification de courbe caractéristique pour un véhicule automobile, le dispositif de modification de courbe caractéristique étant configuré pour modifier une courbe caractéristique d'une pédale d'accélérateur du véhicule automobile, le dispositif de modification de courbe caractéristique présentant :
un dispositif de détection pour détecter qu'un amplificateur de frein du véhicule automobile présente un dysfonctionnement, notamment qu'un amplificateur de frein du véhicule automobile ne fonctionne pas ; et **caractérisé par**
un appareil de modification pour modifier une courbe caractéristique de la pédale d'accélérateur de telle sorte que, lorsque la pédale d'accélérateur n'est pas actionnée et qu'un frein du véhicule automobile n'est pas actionné, le véhicule automobile est décéléré si le dispositif de détection a détecté un dysfonctionnement de l'amplificateur de frein.
